# EUROPEAN PATENT APPLICATION

(11) **EP 2 325 503 A1**
(43) Date of publication of application: **25.05.2011**
(21) Application number: 10251864.4
(22) Date of filing: 28.10.2010
(51) Int. Cl.: F16B 7/14, A01K 97/10

(54) **A cam operated clamp**

(30) Priority: 18.11.2009 GB 0920232
(71) Applicant: Fox International Group Limited, Hainault Essex IG6 3UT (GB)
(72) Inventor: Taylor, Adam, Loughton, Essex IG10 2QH (GB)
(74) Representative: Crouch, David John

(57) **Abstract**

A cam operated clamp (18) comprising first and second clamp parts (22 and 26) and a pivot pin. (40) attached to the first part (22). The said second part (26) is located between portions of the said first part (22) and the pivot pin (40). A cam (48) is pivotable about the pivot pin (40) such that the thickness of that part of the cam (48) which for the time being is between the said pivot pin (40) and the said second part (26) can be varied by pivoting the cam (48) about the pivot pin (40). As a result the said second part (26) is moveable towards and away from the said portions of the said first part (22) for at least one position of the cam (48). The clamp (18) is adjustable to adjust the distance between the said portions of the said first part (22) and the pivot pin (40).

## Description

The present invention relates to a cam operated clamp.

One previously proposed construction of such a clamp is described in EP-A-1 552 742. It comprises a tubular portion formed with an aperture through which a clamp portion extends. An elongate member extends through the tubular portion. A manually operable pivot member is held over the clamp portion by a pivot pin about which the clamp portion can be pivoted. That part of the clamp which surrounds the pivot pin abuts the clamp portion and is in the form of a cam so that it can be rotated between a position in which little or no force is exerted by the clamp portion against the elongate member so that the latter can be slid relative to the clamp, and a position in which a sufficient force is exerted by the clamp member against the elongate member to lock the latter against sliding movement relative to the clamp.

A problem with this former construction is that no provision is made for thermal expansion and/or contraction which can adversely affect the clamp mechanism. Nor is any allowance made for wear and tear on the abutting surfaces, so that with prolonged use the clamp may weaken.

The present invention seeks to provide a remedy.

Accordingly the present invention is directed to a cam operated clamp comprising first and second clamp parts and a pivot pin attached to the first part, the said second part being located between portions of the said first part and the pivot pin, and a cam which is pivotable about the pivot pin such that the thickness of that part of the cam which for the time being is between the said pivot pin and the said second part can be varied by pivoting the cam about the pivot pin, so that the said second part is moveable towards and away from the said portions of the said first part for at least one position of the cam, in which the clamp is adjustable to adjust the distance between the said portions of the said first part and the pivot pin.

Changes brought about by wear and tear and/or temperature variations can be compensated for by adjusting the clamp. Whilst this provides benefit almost regardless of the material from which the clamp is made, it is especially advantageous if the material from which the clamp is made comprises steel, especially stainless steel.

More especially but not exclusively, the present invention is directed to a cam operated clamp comprising a first part having at least one aperture through which extends a screw, a pivot pin having a transverse internally screwthreaded aperture engaged by the screwthreaded shank of the screw, a second part located between portions of the said first part and the pivot pin and having at least one aperture through which extends the screw, and a cam which is pivotable about the pivot pin such that the thickness of that part of the cam which for the time being is between the said pivot pin and the said second part can be varied by pivoting the cam about the pivot pin, so the said second part is axially moveable with respect to the screw for at least one position of the cam.

The distance between the said portions of the said first part and the pivot pin can be adjusted by rotation of the screws.

Preferably the cam is manually operable.

Preferably the first part has two spaced apart apertures through which extend respective such screws, and the pivot pin also has two transverse internally screwthreaded apertures engaged respectively by the shanks of the two screws, the said second part having two apertures respectively through which extend the two screws in such a fashion that said second part is axially moveable with respect to both screws for at least one position of the cam.

An elongate part may extend through the clamp, for example between the screws, so that the elongate part is slidable relative to the clamp when the cam is in a first setting and locked in position relative to the clamp when the cam is in a second setting.

The clamp may be located at an end of a hollow tubular member which receives such an elongate part, so that the tubular member and the elongate part together form a telescopic arrangement.

The invention extends to an angler's bank stick, or an angler's buzz bar, or a rod pod, or a seat or bedchair, or any other piece of angling equipment which comprises such a telescopic arrangement.

An example of a cam operated clamp embodying the present invention will now be described in greater detail with reference to the accompanying drawings in which:-
- Figure 1: shows an elevational perspective side view of an angler's bank stick incorporating such a clamp;
- Figure 2: shows an exploded view of the bank stick shown in Figure 1; and
- Figure 3: shows an exploded view of an angler's buzz bar incorporating two such clamps.

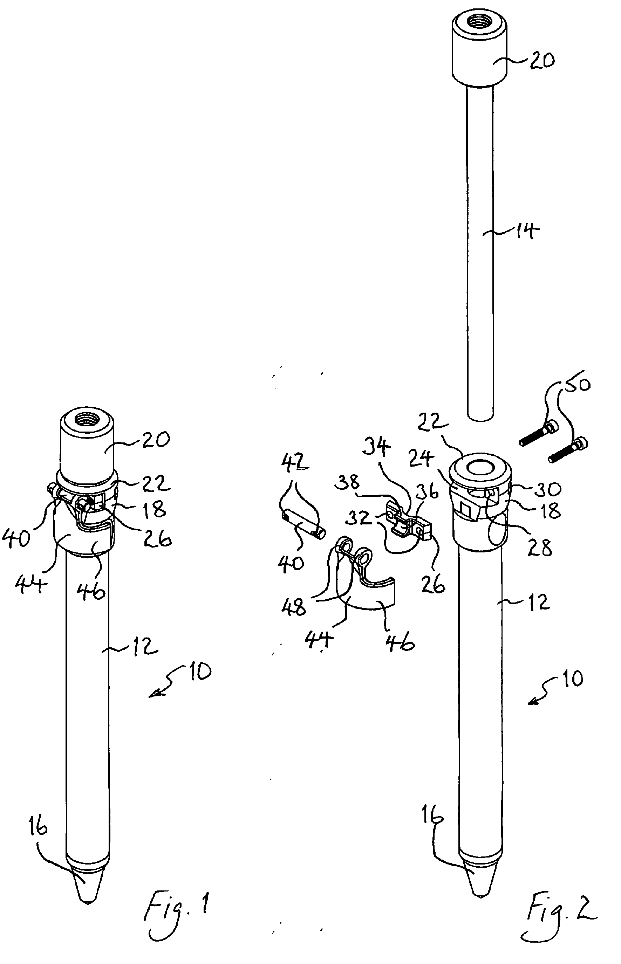

A telescopic bank stick 10 shown in Figures 1 and 2 comprises a tubular stainless steel lower outer leg portion 12 and an elongate upper inner leg portion 14 telescoped with the outer leg portion 12.

The lower end 16 of the lower leg portion 12 is tapered to enable it to be pushed into the ground. Its other end is provided with a cam operated clamp 18.

The upper end of the inner leg portion 14 is provided with an internally screwthreaded generally cylindrical connector portion 20 having a cross-sectional diameter which is only slightly less than that of the clamp 18, so that the overall cross section of the clamp 18 is substantially the same as that of the connector portion 20, the construction of the clamp facilitating this feature. This makes the bank stick 10 streamlined and less likely to snag a line or fishing tackle than previous constructions of bank stick.

The clamp 18 comprises a ring shaped first part 22 through which extends the inner leg portion 14. That part 22 is provided with a recess 24 in its side which accommodates a second clamp part 26. The first part 22 is formed with two apertures or through holes 28 (only one of which is visible in Figure 2) opening out at respective first ends into respective recesses 30 (again, only one of which is visible in Figure 2) formed in the side of the first part opposite the recess 24. The second clamp part 26 comprises an elongate insert formed with apertures in the form of two through holes 32 in registration with the through holes 28 in the first part 22.

The clamp part 26 is formed with two concave surfaces, one 34 on its inwardly directed side to receive a portion of the inner leg portion 14 and inhibit lateral movement thereof, and the other 36 on an outwardly projecting protuberance 38. A pivot pin 40 is provided with two internally screwthreaded apertures 42 respectively located towards the ends of the pin 40.

A manually operable lever 44 has an arcuate handle 46 which partially surrounds an upper portion of the outer leg portion 12, and two ring shaped lugs 48 which surround the pin 40. Each lug varies in thickness in progressing around its ring, so as to constitute a cam. Two screws 50 extend respectively through the holes 28 and the holes 32, and have their respective externally screwthreaded shanks engaging the internally screwthreaded apertures 42. The heads of the screws are recessed in the recesses 30. The screws are adjusted so that a small amount of lateral movement of the insert 26 is possible when the lever 44 is pivoted to its outwardly projecting position, to enable the inner leg portion 14 to be slid in and out of the outer leg portion 12, whereas the cams of the lugs 48 lock the insert 26 against the inner leg portion 14 when the lever 44 is positioned against the side of the outer leg portion 12, as illustrated, to prevent such sliding movement between the telescopic leg portions 12 and 14.

The various parts of the bank stick 10 are injection moulded stainless steel parts, but the concave surface 34 of the clamp part 26 that contacts the portion 14 may comprise rubber, nylon or other thermoplastics material to inhibit marking.

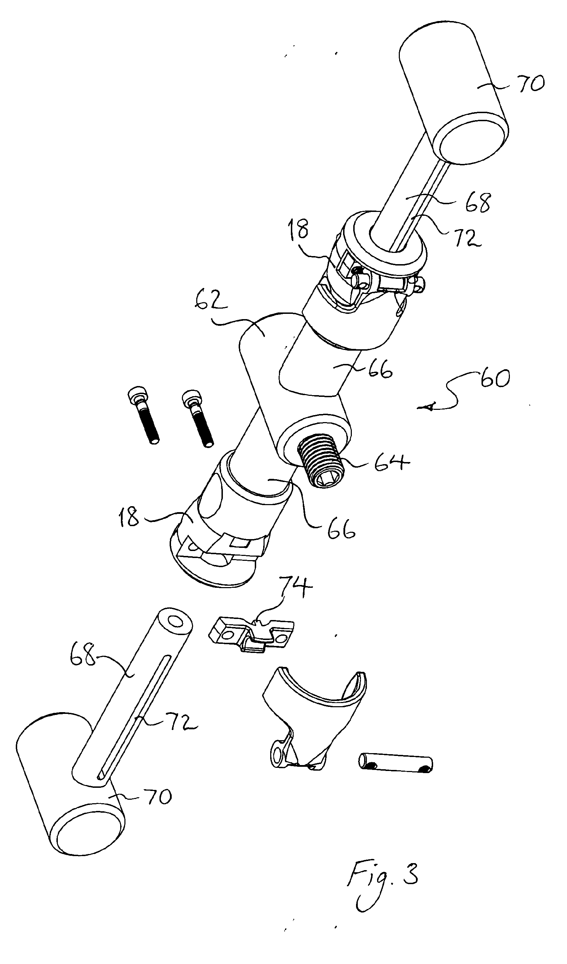

With reference to Figure 3, there is shown an angler's buzz bar 60 made of stainless steel or a suitable plastics material and comprising a central rod support or bite detector mount 62 having an externally screwthreaded shank 64 extending from its intended underside and two tubular elongate portions 66 extending laterally and respectively from opposite sides of the mount 62. Respective clamps 18 each as shown and described with reference to Figure 1 are provided at the distal ends of the portions 66. Each clamp 18 receives an elongate member 68 of generally circular cross section, at the end of which is provided a further rod support or bite detector mount 70. Each member 68 is formed with a longitudinally extending slot 72 which is engaged by a spigot 74 in the interior of the associated clamp 18 to ensure that both mounts 70 are oriented in the same direction as the mount 62.

By means of the clamps 18 and the telescopic arrangements of the members 68 in the portions 66 in the Figure 3 construction, the distance between each mount 70 and the mount 62 can be adjusted independently.

Numerous variations and modifications to the illustrated clamp and bank stick may occur to the reader without taking the resulting construction outside the scope of the present invention. To give one example only, the position of one side of the insert 26 and the pin 40 may be relatively fixed, and fine adjustment of the location of the pin 40 may be effected by one screw only. A soft rubber insert (not shown) may be provided on the inwardly directed concave surface 34 of the clamp part 26, to improve the grip of the clamp 18 on the inner leg portion 14 whilst reducing frictional wear.

## Claims

1. A cam operated clamp (18) comprising first and second clamp parts (22 and 26) and a pivot pin (40) attached to the first part (22), the said second part (26) being located between portions of the said first part (22) and the pivot pin (40), and a cam (48) which is pivotable about the pivot pin (40) such that the thickness of that part of the cam (48) which for the time being is between the said pivot pin (40) and the said second part (26) can be varied by pivoting the cam (48) about the pivot pin (40), so that the said second part (26) is moveable towards and away from the said portions of the said first part (22) for at least one position of the cam (48), **characterised in that** the clamp (18) is adjustable to adjust the distance between the said portions of the said first part (22) and the pivot pin (40).

2. A cam operated clamp (18) comprising a first part (22) having at least one aperture (28) through which extends a screw (50), a pivot pin (40) having a transverse internally screwthreaded aperture (42) engaged by the screwthreaded shank of the screw (50), a second part (26) located between portions of the said first part (22) and the pivot pin (40) and having at least one aperture (32) through which extends the screw (50), and a cam (48) which is pivotable about the pivot pin (40) such that the thickness of that part of the cam (48) which for the time being is between the said pivot pin (40) and the said second part (26) can be varied by pivoting the cam (48) about the pivot pin (40), so the said second part (26) is axially moveable with respect to the screw (50) for at least one position of the cam (48).

3. A clamp according to claim 2, **characterised in that** the first part (22) has two spaced apart apertures (28) through which extend respective such screws (50), and the pivot pin (40) also has two transverse internally screwthreaded apertures (42) engaged respectively by the shanks of the two screws (50), the said second part (26) having two apertures (32) respectively through which extend the two screws (50) in such a fashion that said second part (26) is axially moveable with respect to both screws (50) for at least one position of the cam (48).

4. A clamp according to any preceding claim, **characterised in that** the cam (48) is manually operable.

5. A clamp according to any preceding claim, **characterised in that** an elongate part (14) extends through the clamp (18) so that the elongate part (14) is slidable relative to the clamp (18) when the cam (48) is in a first setting and locked in position relative to the clamp (18) when the cam (48) is in a second setting.

6. A clamp according to claim 5, **characterised in that** the clamp (18) is located at an end of a hollow tubular member (12) which receives such an elongate part (14), so that the tubular member (12) and the elongate part (14) together form a telescopic arrangement.

7. An angler's bank stick (10), or an angler's buzz bar (60), or a rod pod, or a seat or bedchair, or any other piece of angling equipment which comprises such a telescopic arrangement as claimed in claim 6.
